# EUROPEAN PATENT APPLICATION

(11) **EP 4 604 308 A1**
(43) Date of publication of application: **20.08.2025**
(21) Application number: 24206409.5
(22) Date of filing: 14.10.2024
(51) Int. Cl.: H01M 50/566, H01M 50/528, H01M 50/103, H01M 50/147, H01M 50/15, H01M 50/169, H01M 50/176, H01M 50/531, H01M 50/553, H01M 50/188, H01M 50/557, H01M 50/548, H01M 10/04

(54) **CAP-SUBPLATE ASSEMBLY, SECONDARY BATTERY, AND METHOD OF MANUFACTURING SECONDARY BATTERY**

(30) Priority: 19.02.2024 KR 20240023746
(71) Applicant: SAMSUNG SDI CO., LTD., Yongin-si, Gyeonggi-do 17084 (KR)
(72) Inventor: Kim, Jihwan, 17084 Yongin-Si, Gyeonggi-do (KR); Bae, Kwangsoo, 17084 Yongin-Si, Gyeonggi-do (KR); Lee, Junhyung, 17084 Yongin-Si Gyeonggi-do (KR); Yong, Jun-Sun, 17084 Yongin-Si, Gyeonggi-do (KR); Bae, Chaeeun, 17084 Yongin-Si, Gyeonggi-do (KR); Roh, Heyoungcheoul, 17084 Yongin-Si, Gyeonggi-do (KR); Lee, Jungwoo, 17084 Yongin-Si, Gyeonggi-do (KR)
(74) Representative: Gulde & Partner

(57) **Abstract**

A secondary battery comprises an electrode assembly, a subplate assembly including a subplate connected to the electrode assembly and a current collector coupled to a surface of the subplate, and a cap assembly coupled to the subplate assembly. The cap assembly comprises a cap plate and at least one open area is formed in the cap plate such that a portion of the subplate is uncovered by the cap plate.

## Description

### BACKGROUND

### 1. Field

Aspects of embodiments of the present disclosure relate to a cap-subplate assembly, a secondary battery, and a method of manufacturing the secondary battery.

### 2. Description of the Related Art

A secondary battery refers to a rechargeable battery that may be charged and discharged a plurality of times. Secondary batteries are mainly used in various applications such as electronics (e.g., smartphones, notebook computers, and tablets), electric vehicles, solar power generation, and emergency power supplies. In particular, lithium (Li)-ion batteries are used in various electronic products and electric vehicles due to high energy density and high charge and discharge efficiency thereof.

Secondary batteries may be categorized as cylindrical secondary batteries, prismatic secondary batteries, and pouch secondary batteries, depending on the shape of the case. A prismatic secondary battery has a structure in which an electrode assembly is accommodated in a cylindrical metal can. The electrode assembly is inserted into the prismatic metal can, which is then sealed by welding a cap plate to the can. However, when there is a poor fit between a current collector and a terminal plate in such a secondary battery, the electrical characteristics of the secondary battery may be degraded.

The above information disclosed in this Background section is for enhancement of understanding of the background of the present disclosure, and therefore, it may include information that does not constitute related (or prior) art.

### SUMMARY

An aspect of the present disclosure is to provide a cap-subplate assembly, a secondary battery, and a method of manufacturing the secondary battery configured to solve at least one of the problems described above.

These and other aspects and features of the present disclosure will be described in or will be apparent from the following description of embodiments of the present disclosure.

According to a first aspect of the present disclosure, a secondary battery comprises, an electrode assembly, a first subplate assembly including a first subplate connected to the electrode assembly and a first current collector coupled to a surface of the first subplate, and a first cap assembly coupled to the first subplate assembly, wherein the first cap assembly includes a first cap plate, and at least one first open area is formed in the first cap plate such that a portion of the subplate is uncovered by the first cap plate.

In some embodiments, the first cap assembly further comprises a first terminal plate coupled to the first cap plate, and the first terminal plate is connected to the first current collector.

In some embodiments, the first current collector comprises a first planar portion and a first protruding portion, and the first protruding portion is connected to the first terminal plate.

In some embodiments, an upper surface of the first terminal plate comprises an area welded to the first protruding portion.

In some embodiments, the first subplate and the electrode assembly are fixed by welding through the at least one open area, to thereby form a weld area on the first subplate.

In some embodiments, the secondary battery further comprises at least one outer cover positioned in the at least one open area formed in the first cap plate.

In some embodiments, the first cap plate comprises a weld area welded along the open area.

In some embodiments, the cap plate comprises an area welded to the cap plate that is adjacent to the open area.

In some embodiments, the secondary battery further comprises a case accommodating the electrode assembly, wherein the case is fixed to the first cap plate by welding.

In some embodiments, the secondary battery further comprises a case accommodating the electrode assembly, the case comprising an open first side and an open second side opposite the first side,
wherein the first cap plate covers at least one of the first side and the second side, the first cap assembly includes a first terminal plate coupled to the first cap plate, and a sealing member is positioned between the first cap plate and the first terminal plate.

In some embodiments, the case comprises, a first long sidewall and a second long sidewall facing each other and spaced apart from each other, and a first short sidewall and a second short sidewall facing each other and spaced apart from each other, wherein areas of the first short sidewall and the second short are less than areas of the first long sidewall and the second long sidewall.

In some embodiments, the first cap assembly further comprises a terminal plate coupled to the first cap plate, the terminal plate comprises an upper terminal plate and a lower terminal plate, and the upper terminal plate and the lower terminal plate are formed of different materials.

In some embodiments, a second cap assembly further comprising a second terminal plate coupled to the second cap plate, the second terminal plate comprises an upper terminal plate and a lower terminal plate, and the upper terminal plate and the lower terminal plate are formed of different materials.

According to a second aspect of the present disclosure, a cap-subplate assembly for a secondary battery comprises a subplate assembly including a subplate and a current collector coupled to the subplate, and a cap assembly coupled to the subplate assembly, wherein the cap assembly comprises a cap plate, with at least one open area formed in the cap plate such that a portion of the subplate is uncovered by the cap plate, a terminal plate coupled to the cap plate, and a sealing member positioned between the cap plate and the terminal plate.

In some embodiments, the current collector comprises a planar portion and a protruding portion, and the protruding portion is connected to the terminal plate.

In some embodiments, an upper surface of the terminal plate comprises an area welded to the protruding portion.

In some embodiments, the cap-subplate assembly further comprises at least one outer cover positioned in the at least one open area formed in the cap plate.

According to some embodiments of the present disclosure, a method of manufacturing a secondary battery, the method comprises, preparing a cap-subplate assembly comprising a cap assembly and a subplate assembly, the subplate assembly comprising a subplate and a current collector coupled to the subplate, inserting an electrode assembly into a case, coupling the cap-subplate assembly to an end of the case, and welding the subplate to the electrode assembly, wherein at least one open area is formed in the cap assembly such that a portion of the subplate is uncovered by the cap assembly.

In some embodiments, the cap assembly comprises a cap plate, and the coupling of the cap-subplate assembly to the end of the case comprises joining the end of the case and the cap plate by welding.

In some embodiments, the welding of the subplate to the electrode assembly comprises welding the subplate and the electrode assembly exposed by the at least one open area.

In some embodiments, the method further comprises positioning an outer cover to the open area of the cap assembly and welding the outer cover to the cap assembly.

In some embodiments, the preparing of the cap-subplate assembly comprises, forming the cap assembly by coupling a cap plate and a terminal plate, forming the subplate assembly by coupling the subplate and the current collector; and welding the terminal plate and the current collector.

According to embodiments of the present disclosure, prior to mounting on the case, it can be determined whether the current collector and the terminal plate are tightly fitted together, and the cap assembly and the subplate assembly may be coupled to each other. Accordingly, defects in the welding joint between the current collector and the terminal plate may be reduced, thereby improving the reliability of the secondary battery.

According to embodiments of the present disclosure, it can be determined whether the current collector and the terminal plate are tightly fitted together, and the cap assembly and the subplate assembly may be coupled to each other. Any defect in the coupling between the current collector and the terminal plate may be easily detected, thereby making the manufacturing process easier and reducing the manufacturing cost.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective diagram showing a secondary battery according to some embodiments of the present disclosure;
FIG. 2 illustrates a cross-sectional diagram showing the secondary battery according to some embodiments of the present disclosure;
FIG. 3 illustrates a perspective diagram showing a case according to some embodiments of the present disclosure;
FIG. 4 illustrates an enlarged diagram showing a region R1 in FIG. 2.
FIG. 5 illustrates a first cap assembly according to some embodiments of the present disclosure;
FIG. 6 illustrates an enlarged diagram showing a region R2 in FIG. 2;
FIG. 7 illustrates a second cap assembly according to some embodiments of the present disclosure;
FIG. 8 illustrates a perspective diagram showing a cap-subplate assembly according to some embodiments of the present disclosure;
FIGS. 9 to 12 illustrate a method of manufacturing a secondary battery according to some embodiments of the present disclosure;
FIG. 13 illustrates a flowchart showing a method of manufacturing a secondary battery according to some embodiments of the present disclosure.

### DETAILED DESCRIPTION OF THE EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be positioned in contact with the upper (or lower) surface of the element, and another element may also be interposed between the element and the arbitrary element positioned on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

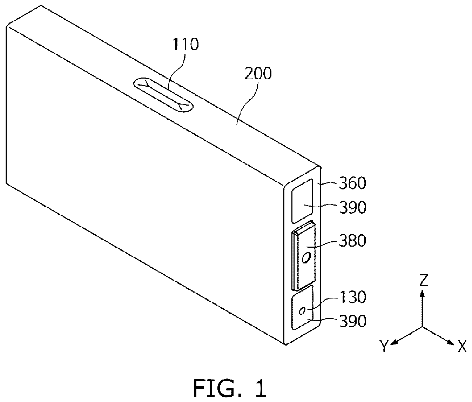

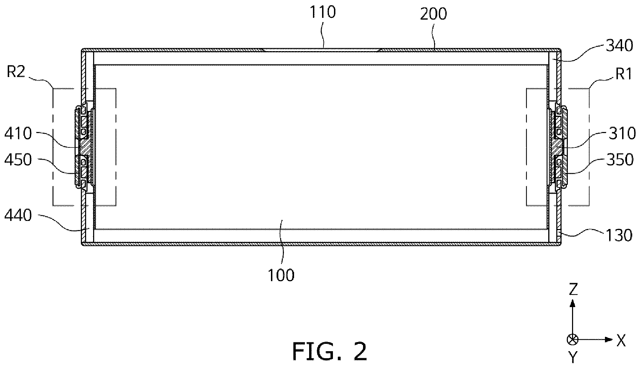

FIG. 1 illustrates a perspective diagram showing a secondary battery according to some embodiments of the present disclosure. FIG. 2 illustrates a cross-sectional diagram showing the secondary battery according to some embodiments of the present disclosure.

Referring to FIGS. 1 and 2, the secondary battery may include an electrode assembly 100, a case 200 accommodating the electrode assembly 100, a first subplate assembly 310, a second assembly 410, a first cap assembly 350, and a second cap assembly 450.

The electrode assembly 100 may be included in the case 200. The electrode assembly 100 may be provided by winding or stacking a laminate including a first electrode plate (not shown), a separator (not shown), and a second electrode plate (not shown), each of which may be formed of a thin plate or film. When the electrode assembly 100 is a wound laminate, the axis of the winding thereof may be parallel to the longitudinal direction of the case 200. Instead of a wound type, the electrode assembly 100 may be a stack type, but the shape of the electrode assembly 100 of the present disclosure is not limited in this regard. Further, the electrode assembly 100 may be a Z stack electrode assembly in which a positive electrode plate and a negative electrode plate are provided on the opposite sides of the separator bent into a Z-shaped stack. In addition, one or more electrode assemblies 100 may be stacked and received in the case 200 such that the long sides thereof are adjacent to each other, but the present disclosure is not limited with respect to the number of electrode assemblies 100. In the electrode assembly 100, the first electrode plate and the second electrode plate may act as a positive electrode and a negative electrode, respectively, or vice versa.

The first electrode plate may be formed by applying a first electrode active material, such as graphite or carbon, to a first electrode collector plate formed of a metal foil of copper (Cu), a Cu alloy, nickel (Ni), a Ni alloy, or the like. The first electrode plate may include a first electrode tab (or a first uncoated portion), which is a portion to which the first electrode active material is not applied. The first electrode tab may form a path for current flow between the first electrode plate and a first subplate assembly 310. In some examples, the first electrode tab may be formed by cutting the first electrode plate so that the first electrode tab protrudes from a first side of the electrode assembly, and may protrude further from the first side than the separator without additional cutting.

The second electrode plate may be formed by applying a second electrode active material, such as a transition metal oxide, to a second electrode collector plate formed of a metal foil of aluminum (Al), an Al alloy, or the like. The second electrode plate may include a second electrode tab (or a second uncoated portion), which is a portion to which the second electrode active material is not applied. The second electrode tab may form a path for current flow between the second electrode plate and the second subplate assembly 410. In some examples, the second electrode tab may be formed by cutting the second electrode plate so that the second electrode tab protrudes from a second side of the electrode assembly, and may protrude further from the second side than the separator without additional cutting.

In some examples, the first electrode tab may be positioned on the right end side of the electrode assembly, and the second electrode tab may be positioned on the left end side of the electrode assembly. The terms "left" and "right" are used herein for ease of description with reference to the secondary battery illustrated in FIG. 2, and the positions may change as the secondary battery is rotated left and right or up and down.

In some embodiments, an electrolyte inlet 130 may be provided on a first outer cover 390. Electrolyte may be injected into the case 200 through the electrolyte inlet 130. In FIG. 1, the electrolyte inlet 130 is shown as being provided on a first cap plate 360, but is not limited the depicted configuration. For example, the electrolyte inlet 130 may be provided on the first cap plate 360. After the injection of electrolyte is complete, the electrolyte inlet 130 may be sealed using a sealing means such as a stopper.

In some embodiments, a vent 110 may be provided on a first side of the case 200. For example, the vent 110 may be provided on the lower surface of the case 200. Herein, the lower surface may refer to a surface facing downward when the secondary battery is finally mounted. The vent 110 may prevent the secondary battery from exploding or prevent a chain exothermic reaction of secondary batteries arranged in close proximity. For example, the vent 110 may be configured to open when the internal pressure of the secondary battery exceeds a predetermined critical pressure. The critical pressure may be set differently depending on the application, material, purpose, and the like of the secondary battery. In another example, the vent 110 may be configured to open when the internal temperature of the secondary battery exceeds a predetermined critical temperature.

In FIG. 1, the vent 110 is shown as a single vent provided at the center of a side of the case 200, but the vent is not limited in this regard. Any number of vents 110 may be provided at any positions in a side of the case 200. For example, two or more vents 110 may be provided on the side of the case 200.

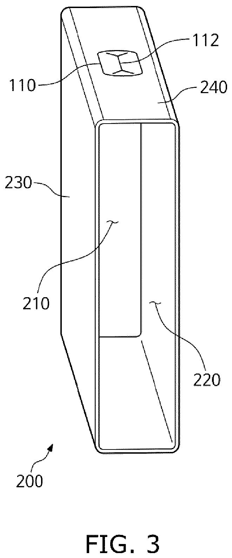

FIG. 3 illustrates a perspective diagram showing a case according to some embodiments of the present disclosure.

Referring to FIGS. 2 and 3, the case 200 may include long sidewalls 230 facing each other, short sidewalls 240 facing each other, an open first side 210, and an open second side 220.

In the figures, a first direction X may refer to the X-axis direction. A second direction Y may be orthogonal to the first direction X. The second direction Y may refer to the Y-axis direction. A third direction Z may be orthogonal to each of the first direction X and the second direction Y. The third direction Z may refer to the Z-axis direction.

The long sidewalls 230 may include a first long sidewall portion and a second long sidewall portion. The first long sidewall portion and the second long sidewall portion may face each other. The first long sidewall portion and the second long sidewall portion may face each other while being spaced apart from each other in the second direction Y.

The short sidewalls 240 may include a first short sidewall portion and a second short sidewall portion. The first short sidewall portion and the second short sidewall portion may face each other. The first short sidewall portion and the second short sidewall portion may face each other while being spaced apart from each other in the third direction Z. The areas the first short sidewall portion and the second short sidewall portion may be less than the areas of the first long sidewall portion and the second long sidewall portion.

The open first side 210 and the open second side 220 may be provided on the opposite sides of the case 200. The open second side 220 may face the open first side 210. The open second side 220 and the open first side 210 may be spaced apart from each other while facing each other in the first direction X. Each of the open first and second sides 210 and 220 may refer to an open area.

The case 200 may be formed of a conductive metal, such as Al, an Al alloy, or Ni-plated steel.

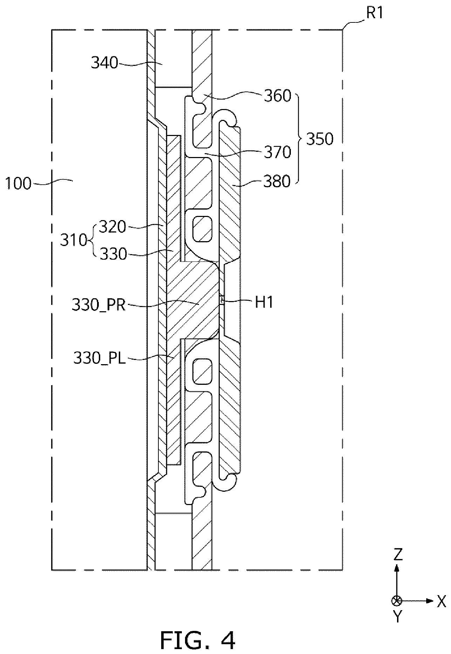

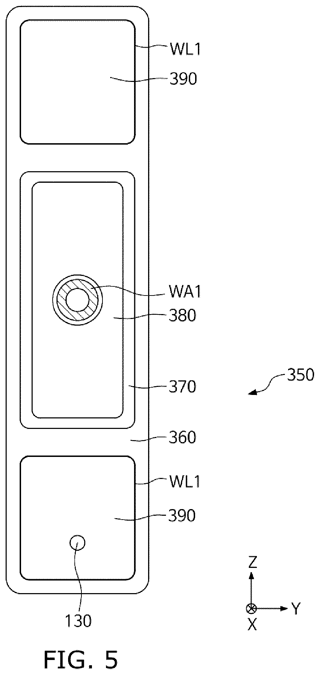

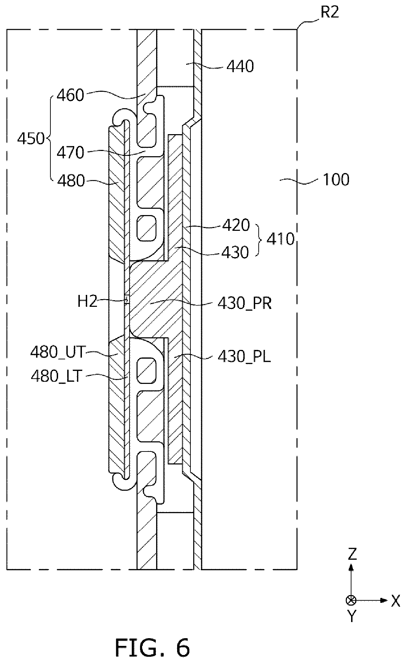

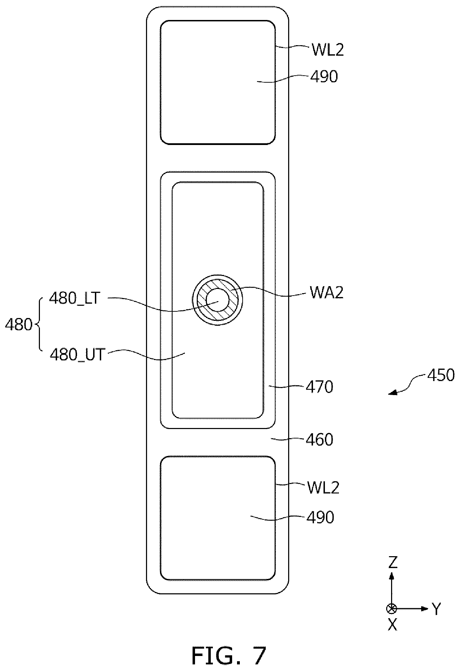

A first cap plate (e.g., 360 in FIGS. 4 and 5) may cover the open first side 210 and may be coupled to the case 200. A second cap plate (e.g., 460 in FIGS. 6 and 7) may cover the open second side 220 and may be coupled to the case 200. For example, each of the first cap plate 360 and the second cap plate 460 may be welded to the case 200. The first cap plate 360 and the second cap plate 460 may seal the case 200.

FIG. 4 illustrates an enlarged diagram showing a region R1 in FIG. 2.

Referring to FIG. 4, the first subplate assembly 310 and the first cap assembly 350 may be coupled to a first side of the electrode assembly 100.

The first subplate assembly 310 may be coupled to the first side of the electrode assembly 100 and may be electrically connected to the first electrode plate (e.g., the positive electrode plate) of the electrode assembly 100. The first subplate assembly 310 may include the first subplate 320 and the first current collector 330.

The first subplate 320 may be coupled to a first electrode tab of the electrode assembly 100. For example, the first electrode tab may be joined to the first subplate 320 by welding. The first subplate 320 may be connected to the first electrode tab and may be electrically connected to the first electrode plate.

The first current collector 330 may be coupled to the first subplate 320. For example, the first current collector 330 and the first subplate 320 may be joined by welding. The first current collector 330 may be electrically connected to the first subplate 320.

The first current collector 330 may include a first planar portion 330_PL and a first protruding portion 330_PR. The first planar portion 330_PL may be joined to the first subplate 320 by welding. The first protruding portion 330_PR may protrude from the first planar portion 330_PL. The first protruding portion 330_PR may have a cylindrical shape.

A first insulation member 340 may be positioned between the first subplate assembly 310 and the first cap assembly 350. The first insulation member 340 may prevent the first subplate 320 and the first cap plate 360 from contacting each other.

The first cap assembly 350 may include a first cap plate 360, a first sealing member 370, and a first terminal plate 380.

The first sealing member 370 may be coupled to the first cap plate 360. The first sealing member 370 may include a first through-hole TH1. The first sealing member 370 may provide a seal between the first terminal plate 380 and the first cap plate 360. The first sealing member 370 may include an insulating material that insulates the first cap plate 360 and the first terminal plate 380 from each other.

The first terminal plate 380 may be coupled to a surface of the first sealing member 370. The upper surface of the first terminal plate 380 may include a recess. For example, the recess may be formed in a portion of the upper surface of the first terminal plate 380 that overlaps the first protruding portion 330_PR in the first direction X. Because of the recess, the thickness of the central portion of the first terminal plate 380 may be less than the thickness of other portions of the first terminal plate 380.

The first terminal plate 380 may be a positive electrode terminal of a secondary battery. A busbar may be welded to a surface of the first terminal plate 380 and may be electrically connected to another secondary battery.

In some embodiments, the first terminal plate 380 may include a first hole H1 provided in a recess of the first terminal plate 380. A portion of the upper surface of the first protruding portion330_PR may be exposed through the first hole H1. In a case where a portion of the upper surface of the first protruding portion 330_PR is exposed through the first hole H1, it can be determined whether the first terminal plate 380 and the first protruding portion330_PR are in contact with each other. However, the present disclosure is not limited in this regard. For example, the first terminal plate 380 may not be provided with the first hole H1 so as to completely cover the upper surface of the first protruding portion330_PR.

The first collector body 330 may be coupled to the first terminal plate 380. Specifically, the first protruding portion 330_PR may extend through a through hole formed in the first sealing member 370 so as to contact the first terminal plate 380. The first protruding portion 330_PR and the first terminal plate 380 may be welded. For example, a first weld area (e.g., WA1 in FIG. 5) may be formed on the upper surface of the first terminal plate 380. A welding process may be performed on the first weld area WA1 to thereby join the first terminal plate 380 and the first current collector 330. Accordingly, the first current collector 330 and the first terminal plate 380 may be electrically connected. Weld beads or the like may be formed in the first weld area WA1 as a result of the welding process. The first weld area WA1 is shown as having a donut shape, but is not limited thereto. That is, the first weld area WA1 may have any shape, by which the first terminal plate 380 and the first collector 330 are joined by welding.

FIG. 5 illustrates a first cap assembly according to some embodiments of the present disclosure. For reference, FIG. 5 may be a plan view of the secondary cell of FIG. 2 viewed in the first direction X.

Referring to FIG. 5, the first cap assembly 350 may include first outer covers 390.

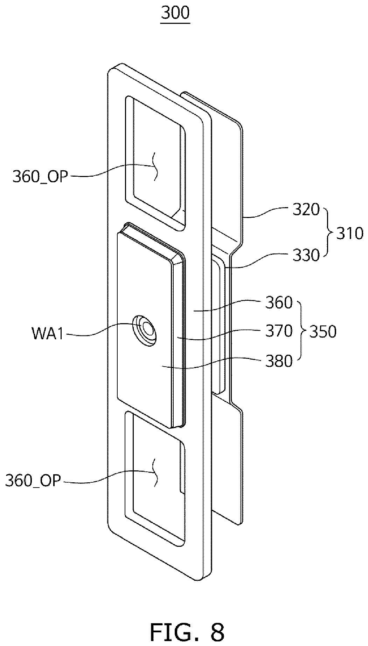

The first cap plate 360 may include at least one open area (e.g., 360_OP in FIG. 8). The first outer covers 390 may be positioned in the first open areas 360_OP of the first cap plate 360, and the first outer covers 390 may be coupled to the first cap plate 360. For example, the first cap plate 360 and the first outer covers 390 may be welded along the first open areas 360_OP of the first cap plate 360. As a result, second weld regions WL1 may be formed along the first open areas 360_OP of the first cap plate 360. The second weld regions WL1 may include weld beads or the like.

In some embodiments, the electrolyte inlet 130 may be provided on at least one of the first outer covers 390, but the present disclosure is not limited in this regard. For example, the electrolyte inlet 130 may be provided on the first cap plate 360.

FIG. 6 illustrates an enlarged diagram showing a region R2 in FIG. 2.

Referring to FIG. 6, the second subplate assembly 410 and the second cap assembly 450 may be coupled to the second side of the electrode assembly 100. The second subplate assembly 410 may be coupled to the second side of the electrode assembly 100, and the second subplate assembly 410 may be electrically connected to a second electrode plate (e.g., a negative electrode plate) of the electrode assembly 100. The second subplate assembly 410 may include a second subplate 420 and a second current collector 430.

The second subplate 420 may be coupled to a second electrode tab of the electrode assembly 100. For example, the second electrode tab may be joined to the second subplate 420 by welding. The second subplate 420 may be connected to the second electrode tab, and the second subplate 420 may be electrically connected to the second electrode plate.

The second current collector 430 may be coupled to the second subplate 420. For example, the second current collector 430 and the second subplate 420 can be joined by welding. The second current collector 430 may be electrically connected to the second subplate 420.

The second current collector 430 may include a second planar portion 430_PL and a second protruding portion 430_PR. The second planar portion 430_PL may be joined to the second subplate 420 by welding. The second protruding portion 430_PR may protrude from the second planar portion 430_PL. The second protruding portion 430_PR may have a cylindrical shape.

A second insulation member 440 may be positioned between the second subplate assembly 410 and the second cap assembly 450. The second insulation member 440 may prevent the second subplate 420 and the second cap plate 460 from contacting each other.

The second cap assembly 450 may include the second cap plate 460, a second sealing member 470, and a second terminal plate 480.

The second sealing member 470 may be coupled to the second cap plate 460. A through-hole may be formed in the second sealing member 470. The second sealing member 470 may provide a seal between the second terminal plate 480 and the second cap plate 460. The second sealing member 470 may include an insulating material. The second sealing member 470 may insulate the second cap plate 460 and the second terminal plate 480 from each other.

The second terminal plate 480 may be coupled to a surface of the second sealing member 470. The second terminal plate 480 may be a negative electrode terminal of the secondary battery. A busbar may be welded to a surface of the second terminal plate 480 and may be electrically connected to another secondary battery. For example, the busbar may be welded to an upper terminal plate 480_UT.

The second terminal plate 480 may include the upper terminal plate 480_UT and a lower terminal plate 480_LT. The lower terminal plate 480_LT may be in contact with the second sealing member 470. The upper terminal plate 480_UT may be positioned on top of the lower terminal plate 480_LT. For example, the lower terminal plate 480_LT may be positioned between the second sealing member 470 and the upper terminal plate 480_UT.

The upper surface of the second terminal plate 480 may include a recess. A portion of the lower terminal plate 480_LT may be exposed through the upper terminal plate 480_UT. For example, a portion of the lower terminal plate 480_LT may be exposed through a recess in the central portion of the upper terminal plate 480_UT. The recess of the upper terminal plate 480_UT may overlap the second protruding portion 430_PR in the first direction X. The recess of the upper terminal plate 480_UT may have the same shape as the recess of the first terminal plate 380 in FIG. 4.

In some embodiments, the upper terminal plate 480_UT and the lower terminal plate 480_LT may be formed of different materials. The upper terminal plate 480_UT may include, for example, aluminum (Al). The lower terminal plate 480_LT may include, for example, copper (Cu). Specifically, the upper terminal plate 480_UT may be a conductive material including Al as a major component. The lower terminal plate 480_LT may be a conductive material including Cu as a major component. As used herein, the term major component means the predominant content material among the materials of the alloy in the language of a person having ordinary knowledge in the art.

Although the upper terminal plate 480_UT has been described as including Al and the lower terminal plate 480_LT has been described as including Cu, these descriptions are merely illustrative. In some embodiments, the upper terminal plate 480_UT and the lower terminal plate 480_LT may include other conductive metals.

In some embodiments, the lower terminal plate 480_LT may include a second hole H2. The second hole H2 may be formed such that the lower terminal plate 480_LT is exposed through the upper terminal plate 480_UT. That is, a portion of the upper surface of the second protruding portion 430_PR may be exposed through the second hole H2. However, the present disclosure is not limited in this regard. For example, the second terminal plate 480 may not include the second hole H2 and, thus, the second terminal plate 480 may completely cover the upper surface of the second protruding portion 430_PR.

The second current collector 430 may be coupled to the second terminal plate 480. Specifically, the second protruding portion 430_PR may extend through the through hole formed in the second sealing member 470 so as to contact the lower terminal plate 480_LT. The second protruding portion 430_PR and the second terminal plate 480 may be welded. For example, a third weld area (e.g., WA2 in FIG. 7) may be formed on the upper surface of the lower terminal plate 480_LT. A welding process may be performed in the third weld area WA2 tojoin the second terminal plate 480 and the second current collector 430. Accordingly, the second current collector 430 and the second terminal plate 480 may be electrically connected. Welding beads or the like may be formed in the third weld area WA2 as a result of the welding process. The third weld area WA2 is shown as having a donut shape but is not limited in this regard. The third weld area WA2 may have any shape, by which the second terminal plate 480 and the second current collector 430 are joined by welding.

FIG. 7 illustrates a second cap assembly according to some embodiments of the present disclosure. For reference, FIG. 7 may be a plan view of the secondary cell of FIG. 2 viewed in the first direction X.

Referring to FIG. 7, the second cap assembly 450 may further include second outer covers 490.

The second cap plate 460 may include one or more second open areas. The second open areas of the second cap plate 460 may have the same shape as the first open areas 360_OP of the first cap plate 360. Second outer covers 490 may be positioned in the open areas of the second cap plate 460, and the second outer covers 490 may be coupled to the second cap plate 460. For example, the second cap plate 460 and the second outer covers 490 may be welded along the second open areas of the second cap plate 460. As a result, fourth weld regions WL2 may be formed along the second open areas of the second cap plate 460. The fourth weld regions WL2 may include weld beads or the like.

FIG. 8 illustrates a perspective diagram showing a cap-subplate assembly according to some embodiments of the present disclosure.

Referring to FIG. 8, a first cap-subplate assembly 300 according to some embodiments of the present disclosure may include the first subplate assembly 310 and the first cap assembly 350.

The first cap-subplate assembly 300 may be used in a secondary battery as described with reference to FIGS. 1 and 2. The first subplate assembly 310 may include the first subplate 320 and the first current collector 330. The first subplate assembly 310 may be the same as described above with reference to FIG. 4.

The first cap assembly 350 may include the first cap plate 360, the first sealing member 370, and the first terminal plate 380. The first sealing member 370 and the first terminal plate 380 may be the same as described above with reference to FIG. 4. Hereinafter, the first cap plate 360 and the first open areas 360_OP will be described.

The first cap plate 360 may include one or more open areas 360_OP. A portion of the first subplate 320 may be exposed through each of the first open areas 360_OP. For example, when the first cap plate 360 is coupled to first side 210 of the case 200 in FIG. 2, the first subplate 320 may be exposed through the first open areas 360_OP.

In some embodiments, the first outer covers 390 in FIG. 5 may be coupled to the first open areas 360_OP. In particular, the first outer covers 390 may be coupled to the first open areas 360_OP to seal the secondary battery.

The first open areas 360_OP are shown as two first open areas provided on opposite sides of the first terminal plate 380, but are not limited to such a configuration. Contrary to what is shown, the first open areas 360_OP may be placed in a variety of positions and be provided in different numbers.

A secondary battery may be manufactured by coupling the electrode assembly and the current collector and coupling the current collector with the terminal plate. In such a secondary battery manufacturing process, when the capacitor and the terminal plate do not tightly fit to each other, a defect may occur in the welding joint. Further, when the electrode assembly and the current collector are coupled and the cap plate is coupled to a surface of the case, it may not be possible to determine whether the terminal plate and the current collector tightly fit to each other. And when the current collector and the terminal plate are not tightly fitted to each other or are not aligned, the electrical characteristics of the secondary battery may be degraded.

The first cap-subplate assembly 300 according to some embodiments of the present disclosure may include the first cap assembly 350 and the first subplate assembly 310. Specifically, the first subplate assembly 310 and the first cap assembly 350 may be provided in a coupled state. Before the first cap-subplate assembly 300 is coupled to the case 200, the first current collector 330 and the first terminal plate 380 may be joined by welding. As a result, it can be determined whether the first current collector 330 and the first terminal plate 380 are tightly fit and aligned after the welding process. Accordingly, the defect rate of the secondary battery may be reduced and the reliability of the secondary battery may be improved.

When the manufacturing process is such that the current collector and the terminal plate are not tightly fit or aligned, the defect may be detected during a later test phase. That is, the defect may be detected after significant steps of the secondary battery manufacturing process have been performed. Accordingly, the manufacturing cost of the secondary battery may be increased.

In a case where the first cap-subplate assembly 300 according to some embodiments of the present disclosure is used, the manufacturing process may be easier, and the manufacturing cost may be reduced. When the coupling between the first current collector 330 and the first terminal plate 380 is problematic, the secondary battery manufacturing process may be performed by replacing the first cap-subplate assembly 300 with another first cap-subplate assembly. Accordingly, the parts for manufacturing the secondary battery may be easily managed, the difficulty of the manufacturing process may be reduced, and the manufacturing cost may be reduced.

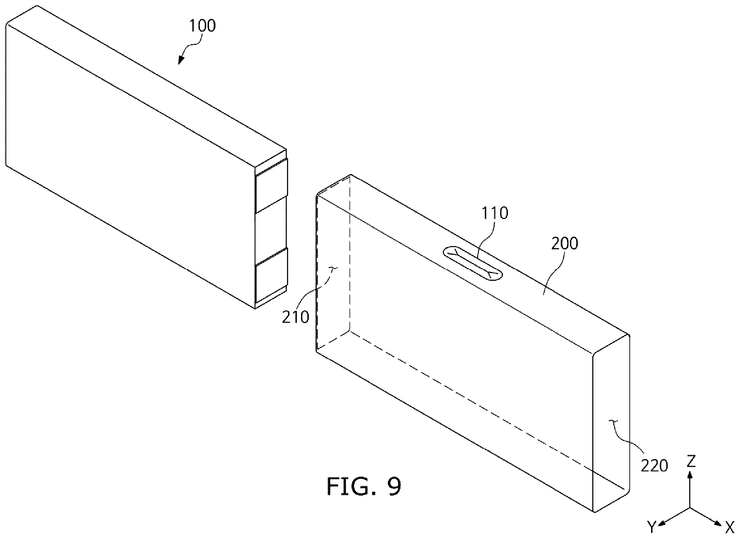

FIGS. 9 to 12 illustrate a method of manufacturing a secondary battery according to some embodiments of the present disclosure.

Referring to FIG. 9, the electrode assembly 100 may be inserted into the case 200. The electrode assembly 100 may extend through the first side 210 (or the second side 220) of the case 200 to be inserted into the case 200 in the first direction X.

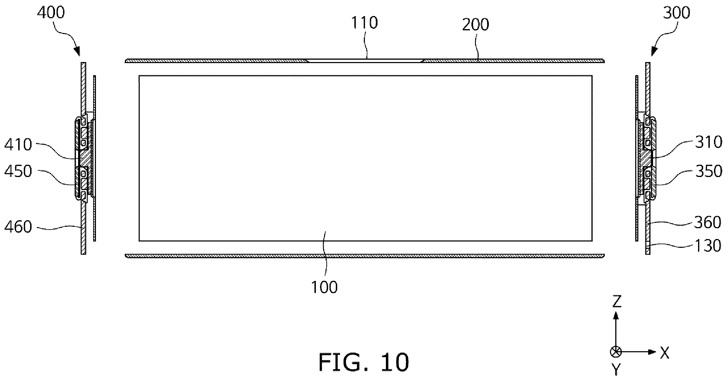

Referring to FIG. 10, the first cap-subplate assembly 300 and the second cap-subplate assembly 400 may be coupled to opposite sides of the case 200. Specifically, the first cap plate 360 may be joined to a first end of the case 200 by welding, and the second cap plate 460 may be joined to a second end of the case 200 by welding. However, the present disclosure is not limited in this regard. The order of the welding of the first cap plate 360 and the second cap plate 460 may be reversed, and the welding of the first cap plate 360 and the second cap plate 460 may be performed substantially at the same time.

In some embodiments, the first terminal plate 380 and the first current collector 330 may be joined by welding, and the second terminal plate 480 and the second current collector 430 may be joined by welding. As described above, the first cap plate 360 and the case 200 are joined by welding and the first terminal plate 380 and the first current collector 330 are welded, but the present disclosure is not limited in this regard. As shown in FIG. 8, in some embodiments the first cap-subplate assembly 300 with the first terminal plate 380 and the first current collector 330 may be joined by welding.

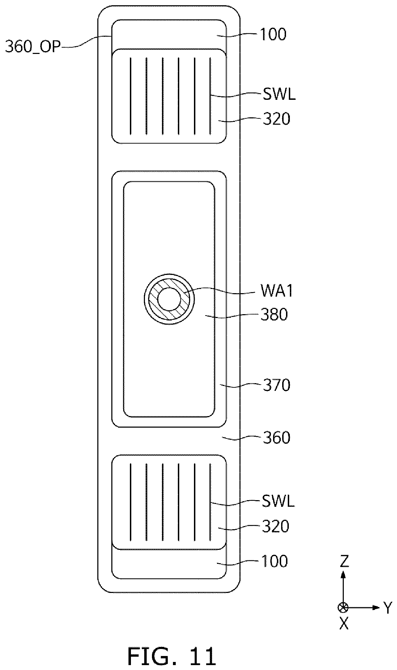

Referring to FIG. 11, the first subplate 320 and the electrode assembly 100 may be joined by welding. Specifically, a welding process may be performed on the first subplate 320 that is exposed by the first open areas 360_OP such that the first subplate 320 and the first electrode tabs of the electrode assembly 100 are joined by welding. As a result, fifth weld areas SWL may be formed on the first subplate 320. The fifth weld areas SWL may include weld beads or the like.

The first subplate 320 and the electrode assembly 100 are shown for ease of description, but the second subplate 420 and the electrode assembly 100 may be coupled in the same manner.

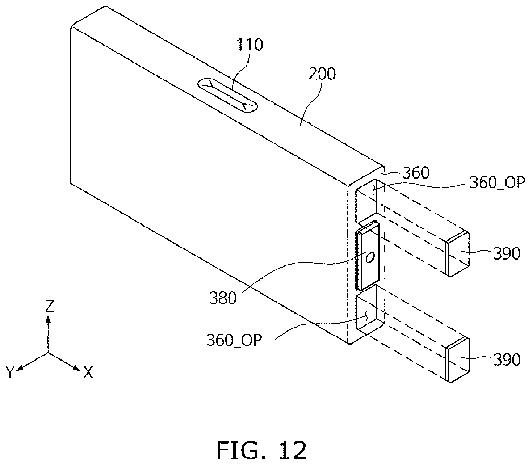

Referring to FIG. 12, the first outer covers 390 may be joined to the first open areas 360_OP by welding. The first outer covers 390 may be positioned on the first open areas 360_OP and may be fixed by the welding joint. As a result, the case 200 may be sealed. The first open areas 360_OP and the first outer covers 390 are shown for ease of description, but the second outer covers 390 may be joined to the second open areas of the second cap plate in the same manner.

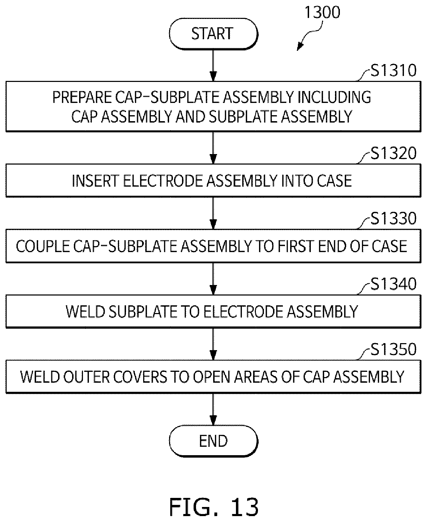

FIG. 13 illustrates a flowchart showing a method of manufacturing a secondary battery 1300 according to some embodiments of the present disclosure.

Referring to FIG. 13, a cap-subplate assembly including a cap assembly and a subplate assembly may be prepared in step S1310. In some embodiments, the cap-subplate assembly with the cap assembly and the subplate assembly are joined by welding. However, the cap-subplate assembly is not limited in this regard. The cap-subplate assembly may be provided when the cap assembly and the subplate assembly are separate.

The electrode assembly may be inserted into the case in step S1320. The electrode assembly may be inserted into an open side of the case. As described above, the cap-subplate assembly is prepared and the electrode assembly is inserted into the case, but the present disclosure is not limited to such a process. For example, the electrode assembly may be inserted into the case and the cap-subplate assembly may be prepared.

The cap-subplate assembly may be coupled to a first end of the case in step S1330. Specifically, the cap plate of the cap-subplate assembly may be joined to the first side of the case by welding. When the cap assembly and the subplate assembly are provided separately, the cap assembly and the subplate assembly may be joined by welding. In addition, the cap-subplate assembly may be joined to a second end of the case in the same or similar manner.

A subplate may be joined to the electrode assembly by welding in step S1340. Specifically, the subplate exposed by the open area of the cap plate may be joined to the electrode tabs of the electrode assembly by welding.

Outer covers may be joined to the open areas of the cap assembly by welding in step S1350. By joining the outer covers to the open area of the cap plate by welding, the secondary battery may be manufactured.

Although the present disclosure has been described above with respect to embodiments thereof, the present disclosure is not limited thereto. Various modifications and variations can be made thereto by those skilled in the art within the scope of the present disclosure and the equivalent scope of the appended claims.

**<Description of Reference Symbols>**

| | | | |
|---|---|---|---|
| 100: | electrode assembly | 200: | case |
| 310: | first subplate assembly | 320: | first subplate |
| 330: | first current collector | 340: | first insulation member |
| 350: | first cap assembly | 360: | first cap plate |
| 360_OP: | first open area | 370: | first sealing member |
| 380: | first terminal plate | 390: | first outer cover |
| 410: | second subplate assembly | 420: | second subplate |
| 430: | second current collector | 440: | second insulation member |
| 450: | second cap assembly | 460: | second cap plate |
| 470: | second sealing member | 480: | second terminal plate |
| 490: | second outer cover | | |

## Claims

1. A secondary battery comprising:
an electrode assembly (100);
a first subplate assembly (310) including a first subplate (320) connected to the electrode assembly (100) and a first current collector (330) coupled to a surface of the first subplate (320); and
a first cap assembly (350) coupled to the first subplate assembly (310),
wherein the first cap assembly (350) includes a first cap plate (360), and at least one first open area (360_OP) is formed in the first cap plate (360) such that a portion of the first subplate (310) is uncovered by the first cap plate (360).

2. The secondary battery according to claim 1, wherein the first cap assembly (350) further comprises a first terminal plate (380) coupled to the first cap plate (360), and
wherein the first terminal plate (380) is connected to the first current collector (330).

3. The secondary battery according to claim 2, wherein the first current collector (330) comprises a first planar portion (330_PL) and a first protruding portion (330_PR), and
wherein the first protruding portion (330_PR) is connected to the first terminal plate (380).

4. The secondary battery according to claim 3, wherein an upper surface of the first terminal plate (380) comprises an area welded to the first protruding portion (330_PR).

5. The secondary battery according to one of the preceding claims, wherein the first subplate (320) and the electrode assembly (100) are fixed by welding through the at least one open area to thereby form a first weld area (WA1) on the first subplate (320).

6. The secondary battery according to one of the preceding claims, further comprising at least one outer cover (390) positioned in the at least one open area formed in the first cap plate (360).

7. The secondary battery according to one of the preceding claims, wherein the first cap plate (360) comprises a weld area welded along the open area.

8. The secondary battery according to one of the preceding claims, further comprising a case (200) accommodating the electrode assembly (100),
wherein the case (200) is fixed to the first cap plate (360) by welding.

9. The secondary battery according to one of the preceding claims, further comprising a case (200) accommodating the electrode assembly (100), the case comprising an open first side (210) and an open second side (220) opposite the first side (210),
wherein the first cap plate (360) covers one of the open first side (210) and the open second side (220), the first cap assembly (350) includes a first terminal plate (380) coupled to the first cap plate (360), and a first sealing member (370) is positioned between the first cap plate (360) and the first terminal plate (380).

10. The secondary battery according to claim 9, wherein the case (200) comprises:
a first long sidewall (230) and a second long sidewall facing each other and spaced apart from each other; and
a first short sidewall (240) and a second short sidewall facing each other and spaced apart from each other,
wherein areas of the first short sidewall (240) and the second short sidewall are less than areas the first long sidewall (230) and the second long sidewall.

11. The secondary battery according to one of the preceding claims, further comprising a second cap assembly (450) further comprising a second terminal plate (480) coupled to the second cap plate (460),
wherein the second terminal plate (480) comprise an upper terminal plate (480_UT) and a lower terminal plate (480_LT), and
wherein the upper terminal plate (480_UT) and the lower terminal plate (480_LT) are formed of different materials.

12. A cap-subplate assembly (300, 400) for a secondary battery comprising:
a subplate assembly (310) including a subplate (320) and a current collector (330) coupled to the subplate (320); and
a cap assembly (350) coupled to the subplate assembly (310),
wherein the cap assembly (350) includes a cap plate (360), with least one open area (360_OP) formed in the cap plate (360) such that a portion of the subplate (320) is uncovered by the cap plate (360), a terminal plate (380) coupled to the cap plate (360), and a sealing member (370) positioned between the cap plate (360) and the terminal plate (380).

13. The cap-subplate assembly according to claim 12, wherein the current collector (330) comprises a planar portion (330_PL) and a protruding portion (330_PR), and
wherein the protruding portion (330_PR) is connected to the terminal plate (380).

14. The cap-subplate assembly according to claim 13, wherein an upper surface of the terminal plate (380) comprises an area welded to the protruding portion (330_PR).

15. The cap-subplate assembly according to one of claims 12 to 14, further comprising at least one outer cover (390) positioned in the at least one open area formed in the cap plate.
